# EUROPÄISCHE PATENTSCHRIFT

(11) **EP 0 456 071 B1**
(45) Veröffentlichungstag und Bekanntmachung des Hinweises auf die Patenterteilung: **17.02.1993**
(21) Anmeldenummer: 91106898.9
(22) Anmeldetag: 27.04.1991
(51) Int. Cl.: C02F 1/78

(54) **Vorrichtung und Verfahren zur Behandlung von Abwässern**
Apparatus and process for waste water treatment
Appareil et procédé pour le traitement des eaux résiduaires

(30) Priorität: 10.05.1990 DE 4015029
(43) Veröffentlichungstag der Anmeldung: 13.11.1991
(73) Patentinhaber: GÜTLING GMBH, D-70704 Fellbach (DE)
(72) Erfinder: Gütling, Walter, W-7012 Fellbach (DE); Oswald, Ernst, W-7300 Esslingen (DE)
(74) Vertreter: KOHLER SCHMID + PARTNER

(56) Entgegenhaltungen:
- EP-A- 0 328 035

## Beschreibung

Die Erfindung betrifft eine Vorrichtung zur Behandlung von Abwässern, insbesondere Industrieabwässern, mit einem gasförmigen Medium, vorzugsweise Ozon, mit wenigstens drei Reaktionsbehältern in denen das Abwasser und das gasförmige Medium im Gegenstrom zueinander geführt sind. Die Erfindung betrifft außerdem ein Verfahren zur Behandlung von Abwässern, wobei das Abwaser durch zwei von wenigstens drei Reaktionsbehälter geleitet und dem Abwasser im Gegenstrom ein gasförmiges Medium, vorzugsweise Ozon, zugeführt wird.

Es ist bekannt, Brauchwasser mittels Ozon dadurch aufzubereiten, daß Ozon in geringen Mengen dem Brauchwasser zugeführt wird. Neuerdings wird Ozon auch zur Abwasserbehandlung eingesetzt.

Mit der DE-A-38 34 834 ist eine Vorrichtung bekannt, bei der Abwässer in mehreren Reaktionsbehältern mit Ozon behandelt wird. Diese Behälter sind hintereinander geschaltet, das heißt der Auslauf eines vorhergehenden Behälters ist an den Einlauf eines nachfolgenden Behälters angeschlossen. Über eine Pumpe wird dem im letzten Behälter sich befindenden Abwaser im Bereich des Bodens des Behälters Ozon zugeführt, so daß das in diesem Behälter sich befindende Abwasser von unten nach oben von dem Ozon durchströmt wird. In diesem Behälter befindet sich oberhalb des Abwasserpegels ein Gaskissen, in dem sich das restliche, nicht verbrauchte Ozon, das aus dem Abwasser austritt, ansammelt. Dieses restliche Ozon wird nunmehr dem im vorhergehenden Behälter sich befindenden Abwasser im Bereich des Behälterbodens zugeführt, so daß das in diesem Behälter sich befindende Abwasser ebenfalls im Gegenstrom vom Restozon durchströmt wird. Das Abwasser durchfließt bei dieser Vorrichtung zuerst den ersten, anschließende den zweiten und schließlich den letzten Behälter, wobei das nunmehr behandelte Abwasser kontinuierlich aus diesem letzten Behälter ausläuft. Zwar wird das Abwasser mit einer derartigen Vorrichtung in hohem Grade gereinigt, jedoch kann der Reinigungsgrad des Abwassers, aufgrund des kontinuierlichen Durchlaufs durch die Vorrichtung, nur innerhalb einer bestimmten Bandbreite gehalten werden. Wird eine Verringerung der Bandbreite erwünscht, so muß der Durchlauf des Abwassers durch die Vorrichtung diskontinuierlich erfolgen, da das Abwasser in der Vorrichtung dann solange verbleiben muß, bis die geforderten Werte erreicht werden. Dies hat jedoch den Nachteil, daß der Durchsatz der Vorrichtung nicht unbeachtlich verringert wird bzw. bei gleichem Durchsatz die Vorrichtung entsprechend vergrößert werden muß, was wiederum den Nachteil mit sich bringt, daß die Vorrichtung unverhältnismäßig teuer wird. So ist zum Beispiel ein vergrößerter Ozongenerator erforderlich, wodurch neben höheren Anschaffungskosten auch höhere Betriebskosten anfallen. Ferner bringt ein diskontinuierlicher Betrieb den Nachteil mit sich, daß bei der Entleerung des letzten Reaktionsbehälters der Ozongenerator abgeschaltet werden muß oder das erzeugte Ozon, da es nicht durch das Abwasser geleitet wird, vernichtet werden muß, was unwirtschaftlich ist.

Der Erfindung liegt daher die Aufgabe zugrunde, eine Vorrichtung und ein Verfahren der eingangs genannten Art zu schaffen, bei der auf wirtschaftliche Art und Weise Abwässer gezielt gereinigt werden können, und vor allem beliebige Reinigungsgrade einstellbar sind.

Diese Aufgabe wird mit einer Vorrichtung der eingangs genannten Art dadurch gelöst, daß wenigsten zwei der Reaktionsbehälter parallel und ein dritter Reaktionsbehälter in Reihe zu diesen geschaltet ist.

Bei einer derart ausgebildeten Vorrichtung kann nun das Abwasser in dem einem der Reaktionsbehälter solange behandelt werden, bis die geforderten Grenzwerte der enthaltenen Schadstoffe erreicht sind. Währenddessen kann der andere, parallel geschaltete Reaktionsbehälter entweder entleert werden oder mit neuem, zu behandelndem Abwasser befüllt werden. Bei unterschiedlich belastetem Abwasser können die Behandlungszeiten des Abwassers in den einzelnen Reaktionsbehältern voneinander abweichen. Außerdem können Behälter mit unterschiedlicher Größe verwendet werden. Die Vorrichtung weist weiterhin den Vorteil auf, daß insbesondere kostenintensive Aggregate, wie Ozongeneratoren und dergleichen, kontinuierlich betrieben werden können, da Abwasser mindestens in einem der parallel geschalteten Reaktionsbehälter behandelt wird. Ein Abschalten des Ozongenerators ist nicht erforderlich. Außerdem können bei gleichem Durchsatz der Vorrichtung kleinere Generatoren verwendet werden, da sie kontinuierlich betrieben werden. Die erfindungsgemäße Vorrichtung weist außerdem den Vorteil auf, daß sie unnterbrochen, das heißt auch während der Nachtstunden und an Sonn- und Feiertagen betrieben werden kann. Da die parallel geschalteten Reaktionsbehälter im sogenannten Batch- oder Pendelchargen-Verfahren betrieben werden, können die Durchsätze der einzelnen Reaktionsbehälter verringert werden, der Gesamtdurchsatz der Vorrichtung jedoch beträchtlich vergrößert werden, da keine Stillstandszeiten auftreten.

Bei einem bevorzugten Ausführungsbeispiel ist vorgesehen, daß die parallel geschalteten Reaktionsbehälter bezüglich der Richtung des Abwaserstroms dem in Reihe geschalteten Reaktionsbehälter nachgeschaltet sind. Dies hat den Vorteil, daß während der Zeit, in der das Abwasser in dem einen der parallel geschalteten Reaktionsbehälter behandelt wird, der andere Reaktionsbehälter entleert und sofort aus dem vorgeschalteten Reaktionsbehälter wieder mit neuem Abwasser befüllt werden kann, wobei dieses Abwasser bereits in dem vorgeschalteten Reaktionsbehälter vorbehandelt sein kann. In dem vorgeschalteten Reaktionsbehälter kann demnach das zu behandelnde Abwasser solange angesammelt werden, bis es an einen der parallel geschalteten Reaktionsbehälter weitergeleitet werden kann. Dieser Reaktionsbehälter kann auf diese Art und Weise relativ schnell mit neuem zu behandelnden Abwasser befüllt werden, so daß die Reinigung des Abwassers nahezu ohne Unterbrechung fortgesetzt werden kann.

Vorzugsweise arbeiten die parallel geschalteten Behälter im Pendelbetrieb. Hierdurch wird ein quasi kontinuierlicher Durchsatz erzielt.

Eine vorteilhafte Weiterbildung sieht vor, daß jeder Reaktionsbehälter eine Pumpenanordnung, insbesondere eine Förderpumpe und eine ihr nachgeschaltete Strahlpumpe, durch die ein Teilstrom des Abwassers hindurchgeleitet wird und an deren Ausgangsseite das gasförmige Medium zugeführt wird, aufweist, die den Teilstrom in der Nähe des am oberen Behälterende sind befindenden Abwassereinlaufs entnimmt und in der Nähe seines am unteren Behälterende sich befindenden Abwasserauslaufs zusammen mit dem gasförmigen Medium wieder zugeführt. Diese Ausgestaltung erlaubt eine feine Dispersion des gasförmigen Mediums, das mit dem entnommenen Teilstrom vermischt und mit diesem dem zu behandelnden Abwasser wieder zugeführt wird. Das gasförmige Medium durchströmt das Abwasser entgegen dessen Strömungsrichtung, das heißt vom unteren zum oberen Behälterende.

Vorteilhaft befindet sich am oberen Ende eines jeden Behälters ein Gaskissen, von dem nicht verbrauchtes gasförmiges Medium über eine Pumpenanordnung dem vorgeschalteten Reaktionsbehälter zugeführt wird. Diese Ausführung hat den Vorteil, daß das gasförmige Medium, welches das Abwasser eines der parallel geschalteten Reaktionsbehälter durchströmt hat und sich in einem Gaskissen oberhalb des Abwasserspiegels ansammelt, im vorgeschalteten Reaktionsbehälter weiterverwendet wird. Hierdurch wird insbesondere teueres Ozon optimal genutzt. Außerdem wird auf diese Weise verhindert, daß restliches Ozon ins Freie gelangt. Durch die Überführung des noch nicht verbrauchten gasförmigen Mediums, also des Restozons, wird vorteilhaft das Abwasser vorbehandelt.

Bei einer bevorzugten Ausführungsform ist vorgesehen, daß die Pumpenanordnungen für die parallel geschalteten Reaktionsbehälter mit einer das gasförmige Medium abgebenden Vorrichtung, insbesondere einem Ozonerzeuger, verbunden sind. Auf diese Weise ist sichergestellt, daß dem in den parallel geschalteten Reaktionsbehältern sich befindenden Abwasser frisches gasförmiges Medium, das heißt Sauerstoff mit einem hohen Anteil an Ozon zugeführt wird, wordurch ein hoher Reingigungsgrad erzielt wird. Dabei kann das von dem Ozonerzeuger hergestellte Ozon entweder beiden parallel geschalteten Reaktionsbehältern oder aber im Falle des Batch-Betriebs nur einem der Behälter zugeführt werden, wenn nämlich der andere gerade entleert bzw. wieder neu befüllt wird. Hierdurch ist sicher gestellt, daß der Ozonerzeuger optimal ausgelastet ist.

Bei einer vorteilhaften Weiterbildung ist vorgesehen, daß insbesondere das Gaskissen des bezüglich der Abwasserströmungsrichtung vordersten Reaktionsbehälters mit einem Ozonvernichter und/oder Gaswäscher verbunden ist. Hierdurch wird sicher gestellt, daß restliches aus dem Abwasser austretendes gasförmiges Behandlungsmedium entweder entfernt wird oder derart konfektioniert wird, daß es bedenkenlos ins Freie abgeleitet werden kann. Im Falle von Ozon als gasförmiges Medium, wird restliches Ozon im einem Ozonvernichter entfernt und eventuell sich während bei der Abwasserbehandlung bildende Gase in Abluftwäschern absorbiert. Für eine zusätzliche Sicherheit sorgt ein Ozongaswarngerät, das die Raum- und Abluft ständig überwacht.

Vorteilhaft ist dem vorderen, in Reihe geschalteten Reaktionsbehälter eine Sammel- und Pumpstation vorgeschaltet. Diese Sammel- und Pumpstation sorgt als Speicherbecken für einen ständig gleichbleibenden Pegel in den Reaktionsbehältern und kann zudem als Absetzbehälter für Schwebstoffe verwendet werden.

Bevorzugt erfolgt zwischen der Sammel- und Pumpstation und dem vordersten Reaktionsbehälter ein insbesondere kontinuierlicher Umlauf des Abwassers. Bei diesem Umlauf kann sicher gestellt werden, das der vorgeschaltete Reaktionsbehälter stets ausreichend gefüllt ist, und daß bereits das in der Sammel-und Pumpstation enthaltene Abwaser vorgereinigt wird. Vorteilhaft ist die Sammel- und Pumpstation mit einem Rührwerk ausgestattet.

Eine bevorzugte Weiterbildung sieht vor, daß insbesondere jeder Abwasser enthaltende Behälter mit Vorrichtungen zum Messen des pH-Wertes und/oder des Redox-Potentials und/oder mit Vorrichtungen zur Konstanthaltung der Werte und gegebenenfalls des Füllstandes versehen ist und/oder eine Vorrichtung zur Zugabe eines entschäumenden Mittels aufweist. Mit den Meßvorrichtungen werden bestimmte Werte des Abwassers, zum Beispiel der pH-Wert gemessen und in Abhängigkeit dieses Meßwertes Säure oder Lauge dem Abwasser solange zugeführt, bis ein vorgegebener pH-Wert erreicht ist. Als Lauge wird zum Beispiel Natronlauge (NaOH) und als Säure zum Beipiel Schwefelsäure (H₂SO₄) verwendet. Zur Regelung der Ozondosierung wird der gemessene Wert des Redox-Potentials verwendet, und in Abhängigkeit dieses Wertes mehr oder weniger Ozon dem Abwasser zugeführt. Mit einem Füllstandsmesser wird die Höhe des Abwasserpegels in den einzelnen Behältern gemessen und gegebenenfalls angezeigt. Mit einem Entschäumer wird verhindert, daß bei der Reinigung des Abwassers unerwünscht große Mengen an Schaum anfallen, der gegebenenfalls Störungen in den einzelnen Aggregaten verursachen könnte.

Die der Erfindung zugrunde liegende Aufgabe wird mittels des eingangs genannten Verfahrens dadurch gelöst, daß bezüglich der Strömungsrichtung des Abwassers parallel zum letzten Reaktionsbehälter in wenigstens einen weiteren Behälter Abwasser behandelt wird. Dies hat den Vorteil, daß, wie bereits oben erwähnt, eine kontinuierliche Reinigung des Abwassers erfolgen kann und somit der Ozongenerator konstant ausgelastet ist. Durch die Behandlung des Abwassers in einem parallelen Reaktionsbehälter wird außerdem der Durchsatz der Anlage vergrößert.

Vorteilhaft erfolgt die Behandlung des Abwassers in den parallel zueinander angeordneten Reaktionsbehältern alternierend, das heißt im Batch-Verfahren. Dabei wird während der Behandlung des Abwassers in dem einen der parallel zueinander angeordneten Reaktionsbehälter der andere entleert und anschließend mit neuem Abwasser befüllt. Während nun dieses neue Abwasser gereinigt wird, kann zwischenzeitlich der andere Reaktionsbehälter entleert und wieder neu befüllt werden.

Vorteilhaft wird das in den vorgeschalteten Reaktionsbehältern sich befindende Abwasser mit dem in den zueinander parallelen Reaktionsbehältern anfallenden nicht reagierten gasförmigen Medien behandelt. Durch diese Vorbehandlung wird auf einfache Weise restliches Ozon verwertet, so daß dieses nicht ungenutzt ins Freie austreten kann. Außerdem erhöht diese Vorozonisierung den Wirkungsgrad der Anlage.

Bei einem Ausführungsbeispiel ist vorgesehen, daß das Abwasser zwischen dem vorderen Reaktionsbehälter und einer Sammel- und Pumpstation in insbesondere kontinuierlichem Umlauf gehalten wird und mit dem gasförmigen Medium und weiteren Mitteln zum Beispiel zur Einstellung des pH-Wertes und/oder des Redox-Potentials, zur Verhinderung der Schaumbildung usw. vorbehandelt wird. Durch diese Vorbehandlung wird die anschließende Reinigungs des Abwasser zusätzlich beschleunigt.

Eine Reinhaltung der Abluft wird vorteilhaft dadurch erreicht, daß das freiwerdende gasförmige Medium gereinigt, bzw. gewaschen und/oder biologisch unschädlich gemacht wird. Dabei werden während der Abwasserbehandlung freigesetzte Gase, wie NH₃, CN und dergleichen elemeniert. Ein noch geringer Ozonrest wird zur Sicherstellung des Emissionsgrenzwertes über einen nachgeschalteten Restozonvernichter auf katalytischer Basis reduziert.

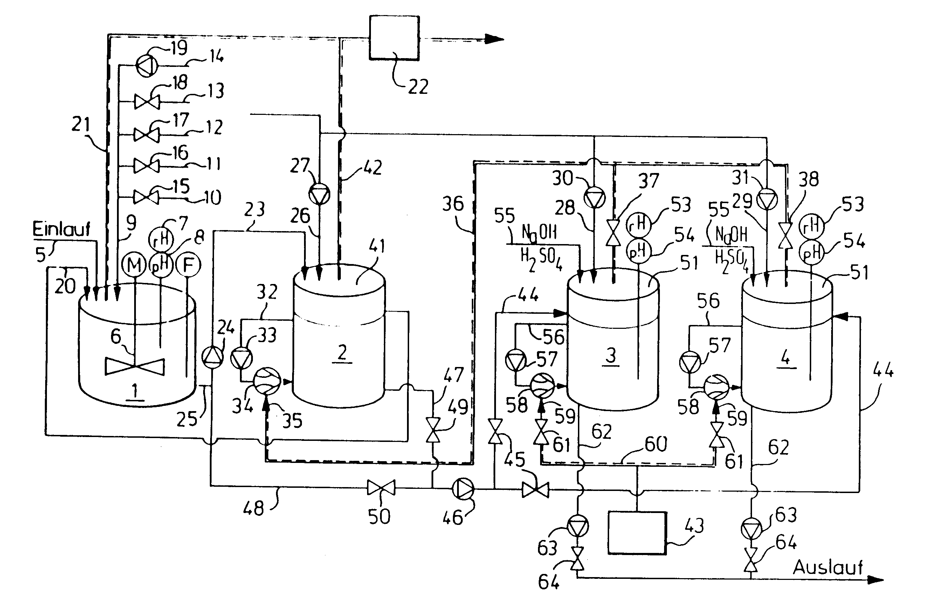

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im einzelnen beschrieben ist.

Die in der Zeichnung schematisch dargestellte Anlage zur Reinigung von Abwässern, insbesondere von Industrieabwässern, weist vier Behälter 1 bis 4 auf, von denen der Behälter 1 eine Sammel- und Pumpstation und die Behälter 2 bis 4 Reaktionsbehälter darstellen. Die Sammel- und Pumpstation 1 ist mit einem Einlauf 5 für das zu behandelnde Abwasser versehen. Ferner weist die Sammel- und Pumpstation 1 einen Mischer 6 mit Mischmotor M auf, der das in der Station 1 sich befindende Abwasser ständig in Bewegung hält. Ferner ist die Sammel- und Pumpstation 1 mit Meßstellen 7 und 8 zur Erfassung des Redox-Potentials (rH) und pH-Wertes des Abwassers versehen. Schließlich ist die Station 1 mit einem Füllstandsanzeiger F versehen, über den der Abwasserpegel erfaßt wird. Am oberen Ende der Sammel- und Pumpstation 1 befindet sich eine Zuleitung 9, über die Zuschlagsstoffe, Flüssigkeiten oder dergleichen dem Abwasser zugegeben werden können, um zum Beispiel den pH-Wert oder das Redox-Potential zu verändern. Es können zum Beispiel Laugen, wie Natronlauge (NaOH) oder Säuren, wie Schwefelsäure (H₂ SO₄) zugegeben werden. Die einzelnen, Zuschlagsstoffe führenden Leitungen 10 bis 14 sind über Absperrventile 15 bis 18 bzw. eine Pumpe 19 mit der Zuleitung 9 verbunden. Die Zugabe der Zuschlagsstoffe kann somit selbsttätig über die Absperrventile 15 bis 18 bzw. die Pumpe 19 in Abhängigkeit der gemessenen Werte der Meßstellen 7 und 8 bzw. des Füllstandsanzeigers F dem Abwasser zugeführt werden. Schließlich weißt die Sammel- und Pumpstation 1 eine weitere Zuleitung 20 auf, über die sie mit Abwasser aus dem Reaktionsbehälter 2 versorgt wird. Am Deckel der Sammel- und Pumpstation 1 befindet sich weiterhin eine Ableitung 21, über die Gase aus der Station 1 über einen Gaswäscher 22 ins Freie abgeführt werden.

Die Zuleitung 20 ist mit dem oberen Abschnitt des Reaktionsbehälters 2 verbunden und bildet einen Überlauf für das sich in diesem Behälter befindende Abwasser. Eine Befüllung dieses Reaktionsbehälters 2 erfolgt über eine Zuleitung 23, die im Deckelbereich in diesen Reaktionsbehälter 2 mündet und über eine Pumpe 24 mit einem im unteren Abschnitt der Sammel- und Pumpstation 1 vorgesehenen Auslauf 25 verbunden ist. Über die Pumpe 24 wird ein konstanter Umlauf von Abwasser zwischen der Sammel- und Pumpstation 1 und dem Reaktionsbehälter 2 aufrecht erhalten. Im Deckelbereich ist ferner eine Zuleitung 26 vorgesehen, die über eine Pumpe 27 mit einem einen Entschäumer enthaltenden Vorratsbehälter verbunden ist. Über die Zuleitung 26 kann demzufolge dem im Reaktionsbehälter 2 sich befindenden Abwasser ein entschäumendes Mittel zugeführt werden, welches die Schaumbildung verringert. Der das entschäumende Mittel enthaltende Vorratsbehälter ist über weitere Zuleitungen 28 und 29 und in diesen Leitungen sich befindenden Pumpen 30 und 31 auch an die Reaktionsbehälter 3 und 4 angeschlossen.

Dem Reaktionsbehälter 2 wird über eine Saugleitung 32, die unterhalb des Abwasserpegels in den Reaktionsbehälter 2 mündet und mit der Saugseite einer Pumpe 33 verbunden ist, ein Teilstrom des Abwassers entnommen um im unteren Bereich dem Reaktionsbehälter 2 über eine Strahlpumpe 34 wieder zugeführt. Die Strahlpumpe 34 weist einen Ansaugstutzen 35 auf, über den sie gasförmiges Medium aus den oberen Bereichen der Reaktionsbehälter 3 und 4 ansaugt. Hierfür ist der Ansaugstutzen 35 über eine Saugleitung 36 und zwei Absperrventile 37 und 38 mit Ableitungen 39 und 40 für das im oberen Bereich der Reaktionsbehälter 3 und 4 sich befindende gasförmige Medium verbunden.

Das über die Strahlpumpe 34 im Teilstrom des Abwassers in das im Reaktionsbehälter 2 sich befindende Abwasser eingebrachte gasförmige Medium durchwandert den Reaktionsbehälter 2 nach oben und sammelt sich dort in einem Gaskissen 41 oberhalb des Abwasserpegels an. In dieses Gaskissen münden eine Ableitung 42 über die das austretende gasförmige Medium über den Gaswäscher 22 ins Freie austreten kann. Wird als gasförmiges Medium zum Beispiel in einem Ozonerzeuger 43 erzeugtes Ozon verwendet, so weist der Gaswäscher 22 zudem noch einen Restozonvernichter auf. In dem Gaswäscher 22 werden insbesondere während der Abwasserbehandlung freigesetzte Gase, wie NH₃, CN usw. elemeniert.

Die beiden Reaktionsbehälter 3 und 4 sind in Reihe geschaltet. Die Befüllung dieser Reaktionsbehälter 3 und 4 erfolgt über die Zuleitungen 44, die über Absperrventile 45 an eine Pumpe 46 angeschlossen sind. Die Saugseite dieser Pumpe 46 ist mit Saugleitungen 47 und 48, in denen wiederum Absperrventile 49 und 50 vorgesehen sind, mit den unteren Abschnitten des Reaktionsbehälters 2 bzw. der Sammel- und Pumpstation 1 verbunden, so daß diesen Behältern Abwasser entnommen werden kann. Dieses Abwasser wird über die Zuleitungen 44 entsprechend der Ventilstellung der Absperrventile 45 entweder dem Reaktionsbehälter 3 oder dem Reaktionsbehälter 4 oder beiden gleichzeitig in deren oberen Bereich zugeführt. Die Befüllung der Reaktionsbehälter 3 und 4 erfolgt solange, bis der Abwasserpegel einen vorbestimmten Abstand zum oberen Deckel der Behälter 3 bzw.4 aufweist. Dies hat den Vorteil, daß sich oberhalb des Abwasserpegels in den beiden Behältern 3 bzw. 4 jeweils ein Gaskissen 51 bilden kann.

Auch die beiden Reaktionsbehälter 3 und 4 sind mit Meßstellen 53 und 54 zur Bestimmung des Redox-Potentials (rH) und des pH-Wertes des Abwassers versehen. Ferner mündet in die Oberseite eines jeden Behälters 3 bzw. 4 eine Zuleitung 55, über die eine Säure oder eine Lauge zur Veränderung des pH-Wertes des Abwassers eingeleitet werden kann. Als Lauge kann zum Beispiel Natronlauge (NaOH) und als Säure kann zum Beispiel Schwefelsäure (H₂SO₄) verwendet werden.

Auch bei jedem der beiden Reaktionsbehälter 3 und 4 wird im Bereich des oberen Abschnitts des Behälters mittels einer Saugleitung 56 ein Teilstrom des Abwassers entnommen und über eine Pumpe 57, an deren Saugseite die Saugleitung 56 angeschlossen ist, unter Zwischenschaltung einer Strahlpumpe 58 der Teilstrom jedem Behälter 3 bzw. 4 in dessen unteren Bereich wieder zugeführt. An der Unterdruckseite der Strahlpumpe 58 ist ein Ansaugstutzen 59 vorgesehen, über den ein gasförmiges Medium angesaugt wird. An diesen Ansaugstutzen 59 schließt sich der Ozonerzeuger 43 über Saugleitungen 60 und Absperrventile 61 an. Dem über die Pumpe 57 geförderten Teilstrom wird somit frisches, aus dem Ozonerzeuger 43 austretendes Ozon über die Strahlpumpe 58 zugeführt. Das im Teilstrom des Abwassers fein verteilte Ozon steigt nun innerhalb der Reaktionsbehälter 3 bzw. 4 auf und reagiert mit dem Abwasser. In dem oberhalb des Abwasserpegels sich befindenden Gaskissen 51 sammelt sich das Restozon bis zur Weiterverwendung an.

Schließlich befindet sich im Bereich des Bodens der Reaktionsbehälter 3 und 4 ein Auslauf 62, über den gereinigtes Abwasser mittels einer Pumpe 63 abgeführt wird. Ein dichter Verschluß der Reaktionsbehälter 3 und 4 wird über Absperrventile 64 erzielt.

Nachfolgend wird der Betrieb der Reinigungsanlage beschrieben. Das in Galvanik-Betrieben anfallende komplexhaltige Abwasser, Färbereiabwässer, chemische Abwässer, Sickerwässer, und andere Abwässer mit biologisch schwer abbaubaren Inhaltsstoffen fließt über den Einlauf der Sammel- und Pumpstation 1 zu. In dieser Station 1 werden über die Meßstellen 7 und 8 das Redox-Potential und der pH-Wert gemessen und in Abhänigkeit der Meßwerte das Abwasser zum Beispiel durch Zugabe einer Lauge bzw. einer Säure vorbehandelt. Über die Pumpe 24 wird das bereits vorbehandelte Abwasser dem Reaktionsbehälter 2 solange zugeführt, bis dieser gefüllt ist, das heißt bis Abwasser über die Zuleitung 20, die als Überlauf wirkt, in die Sammel- und Pumpstation 1 wieder zurückgeführt wird. Im Reaktionsbehälter 2 wird dem Abwasser über die Saugleitung 32 und die Pumpe 33 ein Teilstrom entnommen, dem mittels der Strahlpumpe 34 Ozon zugeführt wird. Dieses im Teilstrom fein verteilte Ozon durchströmt nun das im Reaktionsbehälter 2 sich befindende Abwasser und reagiert mit den Schadstoffen. Diese bestehen zum Beispiel aus Komplexbildnern, wie Cyanid, NTA (Nitrilotriessigsäure), EDTA (Ethylendiamintetraacetat), HEDTA (Hydroxietylendiamintetraacetat), Citrat, Tartrat, Quadrol und harte Komplexe wie Nickelcyano- und Ni-EDTA-Komplexe, oder aus umweltrelevanten Organika wie Phenole, wie PCB (polychlorierte Biphenyle), Dioxine, Furane, PAKW (Polyzyklische aromatische Kohlenwasserstoffe) oder Pestizide. Durch die Vorbehandlung des Abwassers im Reaktionsbehälter 2 mittels des Restozons werden diese Schadstoffe bereits voroxidiert. Der ständige Umlauf des Abwassers vom Behälter 2 zurück in die Sammel- und Pumpstation 1, und von dieser wieder zurück in den Reaktionsbehälter 2 gewährleistet, daß sämtliches in diesen Behältern sich befindendes Abwasser in außreichendem Maße vorbehandelt wird, und daß das das Abwasser im Reaktionsbehälter 2 durchströmende Ozon weitestgehend aufgebraucht wird. Sicherheitshalber befindet sich in der Ableitung 42 ein Gaswäscher 22 mit Ozonvernichter, so daß aus dem Reaktionsbehälter 2 austretendes Abgas gereinigt wird, wodurch zum Beispiel NH₃, CN und Restozon elemeniert wird.

Während dieses Vorreinigungsprozesses findet in den Reaktionsbehältern 3 und 4 die Haupt- und Endreinigung statt, wobei auch hier, wie bereits oben beschrieben, über die Saugleitung 56 und die Pumpe 57 dem Abwasser ein Teilstrom entnommen wird, dem Teilstrom über die Strahlpumpe 58 Sauerstoff mit Ozon zugeführt wird, welches sich fein im Teilstrom verteilt und schließlich das Abwasser im Reaktionsbehälter 3 bzw. 4 von unten nach oben durchströmt und die oben genannten Komplexbildner bzw. Organika rasch oxidativ zerstört. Als Endprodukte fallen unter anderem CO₂, H₂O, Oxalsäure, Essigsäure und weitere ungefährliche Molekülbruchstücke an.

Dem Abwasser in den Reaktionsbehältern 3 bzw. 4 wird solange Ozon zugeführt, bis die Schadstoffe auf einen zulässigen Grenzwert abgebaut worden sind. Ist das Abwasser in einem der Reaktionsbehälter 3 bzw. 4 auf diese Weise gereinigt, so wird der Behälter über die Pumpe 63 entleert und über die Zuleitung 44 entweder mit Abwasser aus dem Reaktionsbehälter 2 oder aus der Sammel- und Pumpstation 1 wieder neu befüllt. Während des Entleerungs- und Befüllungsvorganges des einen Reaktionsbehälters 3 bzw. 4 wird die Reinigung des Abwassers im anderen Reaktionsbehälters 4 bzw. 3 ohne Unterbrechung fort gesetzt, wobei lediglich durch Sperrung eines Absperrventils für denjenigen Reaktionsbehälter, der gerade entleert bzw. neu befüllt wird, das ganze vom Ozonerzeuger 43 erzeugte Ozon dem anderen Reaktionsbehälter zugeführt wird. Dies hat den Vorteil, daß der Ozonerzeuger 43 kontinuierlich betrieben werden kann. Dieser kontinuierliche Betrieb gewährleistet eine hohe Auslastung des Ozonerzeugers 43, und es kann dieser im Gegensatz zu Ozonerzeugern, die Stillstandszeiten aufweisen, geringer dimensioniert sein.

Das in den Reaktionsbehältern neu eingefüllte Abwasser wird in diesem nun auf die oben beschriebene Weise solange gereinigt, bis die geforderten Grenzwerte wieder erreicht sind. Während dessen kann der andere Reaktionsbehälter, dessen Abwasser bereits einen höheren Reinheitsgrad aufweist, dann entleert werden, wenn das Abwasser die geforderten Grenzwerte erreicht hat. Auf diese Weise ist mit den beiden Reaktionsbehältern 3 und 4 ein sogenannter Batch-Betrieb möglich, das heißt während das Abwasser im einen Reaktionsbehälter gereinigt wird, kann der andere Reaktionsbehälter entleert und wieder neu befüllt werden und umgekehrt. Durch dieses Verfahren ist ein kontinuierlicher Betrieb der Anlage möglich, und ist die maximale Auslastung der einzelnen Komponente gewährleistet.

Ein weiterer Vorteil der Reinigungsanlage besteht darin, daß das sich im Gaskessel 51 der beiden Reaktionsbehälter 3 und 4 ansammelnde restliche, nicht verbrauchte Ozon über die Saugleitung 36 dem Ansaugstutzen 35 und der Strahlpumpe 34 und somit dem die Saugleitung 32 durchströmenden Teilstrom zugeführt wird, so daß dieses nicht verbrauchte Restozon zur Vorbehandlung des im Reaktionsbehälter 2 sich befindenden Abwassers verwendet wird, wodurch ein hoher Nutzungsgrad des durch den Ozonerzeuger 43 erzeugten Ozons erzielt wird.

## Patentansprüche

1. Vorrichtung zur Behandlung von Abwässern, insbesondere Industrieabwässern, mit einem gasförmigen Medium, vorzugsweise Ozon, mit wenigstens drei Reaktionsbehältern (2, 3, 4) mit denen das Abwasser und das gasförmige Medium im Gegenstrom zueinander geführt sind, dadurch gekennzeichnet, daß wenigstens zwei der Reaktionsbehälter (3 und 4) parallel und ein dritter Reaktionsbehälter (2) in Reihe zu diesem geschaltet ist.

2. Vorrichtung nach Anspruch 1, dadurch gekennzeichnet, daß die parallel geschalteten Reaktionsbehälter (3 und 4) bezüglich des Abwassers dem in Reihe geschalteten Reaktionsbehälter (2) nachgeschaltet sind.

3. Vorrichtung nach einem der Ansprüche 1 oder 2, dadurch gekennzeichnet, daß jeder Reaktionsbehälter (2, 3, 4) eine Pumpenanordnung, insbesondere eine Förderpumpe (33, 57) und eine ihr nachgeschaltete Strahlpumpe (34, 58), durch die ein Teilstrom des Abwassers hindurchgeleitet wird und an deren Ansaugseite (35, 59) das gasförmige Medium zugeführt wird, aufweist, die den Teilstrom in der Nähe des am oberen Behälterende sich befindenden Abwassereinlaufs entnimmt und in der Nähe seines am unteren Behälterende sich befindenden Abwasserauslaufs zusammen mit dem gasförmigen Medium wieder zuführt.

4. Verfahren zur Behandlung von Abwässern, insbesondere mittels einer Vorrichtung nach einer der vorhergehenden Ansprüche, wobei das Abwasser durch zwei von wenigstens drei Reaktionsbehältern geleitet und dem Abwasser im Gegenstrom ein gasförmiges Medium, vorzugsweise Ozon, zugeführt wird, dadurch gekennzeichnet, daß bezüglich der Strömungsrichtung des Abwassers parallel zum letzten Reaktionsbehälter in wenigstens einem weiteren Behälter Abwasser behandelt wird.

5. Verfahren nach Anspruch 4, dadurch gekennzeichnet, daß die Behandlung des Abwassers in den parallel zueinander angeordneten Reaktionsbehältern alternierend bzw. im Pendelchargenverfahren erfolgt.

6. Verfahren nach Anspruch 4 oder 5, dadurch gekennzeichnet, daß während der Behandlung des Abwassers in einem der parallel zueinander angeordneten Reaktionsbehälter der andere entleert und anschließend mit neuem Abwasser befüllt wird.

7. Verfahren nach einem der Anprüche 4 bis 6, dadurch gekennzeichnet, daß das in den zueinander parallel geschalteten Reaktionsbehältern sich befindende Abwasser mit frischem gasförmigen Medium behandelt wird.

8. Verfahren nach Anspruch 7, dadurch gekennzeichnet, daß das in den vorgeschalteten Behältern sich befindende Abwasser mit dem in den zueinander parallen Reaktionsbehältern anfallenden nicht reagierten gasförmigen Medium behandelt wird.

9. Verfahren nach einem der Ansprüche 4 bis 8, dadurch gekennzeichnet, daß das Abwasser zwischen dem vorderen Reaktionsbehälter und einer Sammel- und Pumpstation in insbesondere kontinuierlichem Umlauf gehalten wird und mit dem gasförmigen Medium und weiteren Mitteln, zum Beispiel zur Einstellung des pH-Wertes, des Redox-Potentials, zur Verhinderung der Schaumbildung usw. vorbehandelt wird.

10. Verfahren nach einem der Ansprüche 4 bis 9, dadurch gekennzeichnet, daß das frei werdende gasförmige Medium gereinigt, bzw. gewaschen und/oder biologisch unschädlich gemacht wird.

## Claims

1. Device for the treatment of waste water, in particular industrial waste water, by means of a gaseous medium, preferably ozone, with at least three reaction containers (2, 3, 4) by means of which the waste water and the gaseous medium are guided towards one another in a counterflow, characterised in that at least two of the reaction containers (3 and 4) are connected in parallel and a third reaction container (2) is connected in series thereto.

2. Device according to claim 1, characterised in that the reaction containers (3 and 4) connected in parallel to one another are, with respect to the waste water, connected downstream to the reaction container (2) which is connected in series.

3. Device according to any one of claims 1 or 2, characterised in that each reaction container (2, 3, 4) comprises a pump arrangement, in particular a delivery pump (33, 57) and a jet pump (34, 58) connected downstream thereto, through which a partial flow of the waste water is guided and the gaseous medium is supplied at the suction side (35, 59) thereof which withdraws the partial flow near the waste water inlet located at the upper end of the container and again supplies it together with the gaseous medium near the waste water outlet located at the lower end of the container.

4. Method of treating waste water, in particular by means of a device according to any one of the preceding claims, wherein the waste water is guided through two of at least three reaction containers and the waste water is supplied in a counterflow with a gaseous medium, preferably ozone, characterised in that waste water is treated in at least one further container in parallel to the last reaction container with respect to the direction of flow of the waste water.

5. Method according to claim 4, characterised in that the treatment of the waste water in the reaction containers arranged in parallel with respect to one another is effected alternately and in a chargewise alternating fashion, respectively.

6. Method according to claim 4 or 5, characterised in that during the treatment of waste water in one of the reaction containers connected in parallel with respect to one another the other reaction container is emptied and subsequently filled with new waste water.

7. Method according to any one of claims 4 to 6, characterised in that the waste water in the reaction containers connected in parallel with respect to one another is treated with fresh gaseous medium.

8. Method according to claim 7, characterised in that the waste water in the upstream containers is treated with the non-reacted gaseous medium which accumulates in the reaction containers connected in parallel with respect to one another.

9. Method according to any one of claims 4 to 8, characterised in that the waste water is retained in particular in continuous circulation between the upstream reaction container and a collecting and pumping station and is pre-treated with the gaseous medium and further agents, for example to set the pH-value, the redox potential, to prevent foam development etc.

10. Method according to any one of claims 4 to 9, characterised in that the gaseous medium which is released, is cleaned and washed, respectively, and/or rendered biologically harmless.

## Revendications

1. Appareil pour le traitement d'eaux résiduaires, en particulier d'eaux résiduaires industrielles, avec un milieu gazeux, de préférence de l'ozone, comprenant au moins trois récipients réactionnels (2, 3, 4) auxquels les eaux résiduaires et le milieu gazeux sont amenés en contre-courant l'un par rapport à l'autre, caractérisé en ce qu'au moins deux des récipients réactionnels (3 et 4) sont montés en parallèle et en ce qu'un troisième récipient réactionnel (2) est monté en série par rapport à ceux-ci.

2. Appareil suivant la revendication 1, caractérisé en ce que les récipients réactionnels (3 et 4) montés en parallèle sont, par rapport aux eaux résiduaires, montés en aval du récipient réactionnel (2) monté en série.

3. Appareil suivant l'une des revendications 1 et 2, caractérisé en ce que chaque récipient réactionnel (2, 3, 4) présente un agencement de pompes, en particulier une pompe de circulation (33, 57) et une pompe à jet (34, 58) montée en aval de celle-ci, à travers lequel un courant partiel des eaux résiduaires est passé et au côté aspiration duquel (35, 59) le milieu gazeux est amené, cet agencement de pompes prélevant le courant partiel à proximité de l'entrée des eaux résiduaires qui se trouve à l'extrémité supérieure du récipient et le ramenant, conjointement au milieu gazeux, à proximité de sa sortie des eaux résiduaires qui se trouve à l'extrémité inférieure du récipient.

4. Procédé de traitement d'eaux résiduaires, en particulier au moyen d'un dispositif suivant l'une des revendications précédentes, dans lequel les eaux résiduaires sont conduites à travers deux d'au moins trois récipients réactionnels, un milieu gazeux, de préférence de l'ozone, étant amené aux eaux résiduaires en contre-courant, caractérisé en ce que, par rapport au sens d'écoulement des eaux résiduaires, les eaux résiduaires sont traitées parallèlement au dernier récipient réactionnel dans au moins un autre récipient.

5. Procédé suivant la revendication 4, caractérisé en ce que le traitement des eaux résiduaires dans les récipients réactionnels agencés mutuellement parallèlement est effectué de manière alternée ou respectivement dans un procédé par lot, pendulaire.

6. Procédé suivant l'une des revendications 4 et 5, caractérisé en ce que, pendant le traitement des eaux résiduaires dans un des récipients réactionnels agencés mutuellement parallèlement, l'autre est vidé et ensuite rempli avec de nouvelles eaux résiduaires.

7. Procédé suivant l'une des revendications 4 à 6, caractérisé en ce que les eaux résiduaires, qui se trouvent dans les récipients réactionnels montés parallèlement l'un à l'autre, sont traitées par un milieu gazeux frais.

8. Procédé suivant la revendication 7, caractérisé en ce que les eaux résiduaires, qui se trouvent dans les récipients montés en amont, sont traitées par le milieu gazeux qui n'a pas réagi et qui est obtenu dans les récipients réactionnels mutuellement parallèles.

9. Procédé suivant l'une des revendications 4 à 8, caractérisé en ce que les eaux résiduaires sont, entre le récipient réactionnel avant et une station de récolte et de pompage, maintenues en circulation en particulier continue et en ce qu'elles sont prétraitées avec le milieu gazeux et d'autres agents, par exemple pour l'ajustement de la valeur du pH, du potentiel d'oxydoréduction, pour empêcher la formation de mousse, etc.

10. Procédé suivant l'une des revendications 4 à 9, caractérisé en ce que le milieu gazeux libéré est purifié et respectivement lavé et/ou rendu biologiquement non nocif.
